# FASCICULE DE BREVET EUROPEEN

(11) **EP 3 836 047 B1**
(45) Date de publication et mention de la délivrance du brevet: **04.10.2023**
(21) Numéro de dépôt: 20207844.0
(22) Date de dépôt: 16.11.2020
(51) Int. Cl.: G06Q 10/04, G06Q 50/06, H02J 13/00

(54) **DIAGNOSTIQUE ASSISTÉ DE RÉSEAU ÉLECTRIQUE**
UNTERSTÜTZTE DIAGNOSE FÜR STROMNETZ
ASSISTED DIAGNOSIS OF ELECTRICAL NETWORK

(30) Priorité: 12.12.2019 FR 1914259
(43) Date de publication de la demande: 16.06.2021
(73) Titulaire: Enedis, 92079 Paris La Defense Cedex (FR)
(72) Inventeur: BRUN, Sébastien, 78110 LE VESINET (FR); PILAUD, Thomas, 69007 LYON (FR); EL KHARRAT, Caroline, 69410 CHAMPAGNE AU MONT D'OR (FR)
(74) Mandataire: Plasseraud IP

(56) Documents cités:
- SHAHID KAMAL ET AL: "Extraction of CIM-Based Distribution Grid Topology Information for Observability", 2019 15TH EUROPEAN DEPENDABLE COMPUTING CONFERENCE (EDCC), IEEE, 17 septembre 2019 (2019-09-17), pages 165-170, XP033649086, DOI: 10.1109/EDCC.2019.00040
- PHILIPPE PELLETIER ET AL: "Linky contributions in management and fault detection", CIRED - OPEN ACCESS PROCEEDINGS JOURNAL, vol. 2017, no. 1, 1 octobre 2017 (2017-10-01), pages 1875-1877, XP055702816, DOI: 10.1049/oap-cired.2017.1326

## Description

### Domaine technique

La présente divulgation relève du domaine de l'entretien de réseaux de distribution électrique, notamment les réseaux de distribution dits « *basse tension* (BT) » c'est-à-dire situé entre un transformateur HTA/BT (haute tension type A / Basse tension) et des noeuds consommateurs correspondant sensiblement aux « *points de livraison* (PDL) ».

### Technique antérieure

La gestion d'un réseau de distribution électrique nécessite d'assurer de nombreuses tâches, notamment d'intervenir rapidement pour réparer les installations en cas d'incident, mais aussi de rénover et d'entretenir les équipements avant même que des incidents ne surviennent pour en réduire le risque et les conséquences en termes de qualité de service.

Pour assurer ces tâches, les gestionnaires de réseaux entretiennent généralement un Systèmes d'information Géographique (SIG). De tels SIG contiennent notamment des cartographies du réseau de distribution électrique. Les cartographies contiennent des données organisées de manière à représenter, le plus fidèlement possible, le réseau physique et les installations qui le constituent. De tels SIG contiennent, plus généralement, des données topologiques des diverses zones constituant le réseau. Plus récemment, les gestionnaires disposent en outre d'un grand nombre de capteurs disposés sur le réseau et aptes à transmettre de manière centralisée des données de mesures en quasi temps réel. Par exemple, les réseaux de distribution électrique en France sont désormais équipés de capteurs de tension, de courant et de puissance. Les compteurs électriques connus sous la référence commerciale « Linky » et installés aux noeuds de consommation, aux extrémités avals des réseaux de distribution, incluent de tels capteurs. Par exemple, les documents suivants traitent de la collecte et de la gestion de données ainsi captées sur des réseaux de distributions :
- « Extraction of CIM-Based Distribution Grid Topology Informations for Observability » (Shahid Kamal et Al, 2019),
- « Linky contributions in management and fault détection » (Philippe Pelletier et Al, 2017).

Cependant, la quantité de données techniques reçues en quasi temps réel ne permet pas une analyse humaine et est donc en grande partie automatisée, c'est-à-dire traitée informatiquement. De tels traitements informatiques permettent de détecter les rares anomalies importantes résultant d'incidents, par exemple les ruptures d'alimentation. La maintenance corrective est donc améliorée. En revanche, les anomalies mineures sont bien plus nombreuses et répandues. Il est notamment impossible, en l'état, de distinguer :
- des « défauts fugitifs », c'est-à-dire des défaillances qui disparaissent naturellement sans qu'il soit nécessaire, ni même pertinent, d'intervenir ; et
- des « signaux faibles » précurseurs d'incidents futurs et pour lesquels il serait souhaitable d'effectuer des interventions préventives.

En outre, les experts techniques sont confrontés à un grand nombre de données auxquelles ils n'avaient pas accès jusqu'à maintenant. L'identification, par les experts, de « signaux faibles » annonciateurs d'un incident parmi les données brutes de mesure est fastidieuse et peu efficiente.

### Résumé

La présente divulgation vient améliorer la situation.

Il est proposé un procédé d'aide au diagnostic de réseaux de distribution électrique selon la revendication 1.

Selon un autre aspect, il est proposé une utilisation du procédé pour l'assistance à la classification de données d'apprentissage supervisé.

Selon un autre aspect, il est proposé un programme informatique comportant des instructions pour la mise en oeuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

Les caractéristiques exposées dans les paragraphes suivants peuvent, optionnellement, être mises en oeuvre. Elles peuvent être mises en oeuvre indépendamment les unes des autres ou en combinaison les unes avec les autres :

Les jeux d'anomalies collectés sont reçus de capteurs agencés pour transmettre un jeu de données d'anomalie seulement à détection d'une excursion de tension, de courant et / ou de puissance hors de plages prédéterminées, chaque jeu de données comprenant en outre une donnée qualifiant ladite excursion. Cela permet à la fois de limiter la quantité de données à transmettre et d'obtenir des informations plus précises et donc d'améliorer la fiabilité de l'agrégation de données,
les données topologiques de chaque zone du réseau comprennent l'un au moins des paramètres suivants :
- départ basse tension de rattachement électrique du capteur ;
- rang du branchement sur le départ ;
- distance (géographique ou en câblage) jusqu'au transformateur ;
- type du câblage de la zone ;
- nature aérienne / souterraine (câble enfoui) du réseau ;
- identifiant du transformateur le plus proche situé en amont ;
- charges horodatées de la zone du réseau ;
- phénomènes météorologiques horodatées de la zone ;
- existence d'opérations de maintenance ou de travaux horodatées dans la zone ;
- informations sur des opérations de maintenance ou de travaux horodatées dans la zone ;
- présence de fourniture locale d'énergie. Les paramètres précités ont été identifiés comme particulièrement pertinents pour mieux agréger les données ;
- présence d'équipement de jonction (ou « boîtiers ») ;
- informations de réparations effectuées sur le réseau ;
- âge des éléments du réseau (dont câbles).

Le procédé comprend en outre, avant de transmettre les agrégats de groupes de jeux de données corrélés à destination d'une interface homme-machine : d') ordonnancer les agrégats les uns par rapport aux autres en fonction du nombre total de noeuds de distribution situés en aval des zones correspondant aux jeux de données de chaque agrégat, de sorte que les analyses humaines puissent être priorisées en fonction d'un nombre de noeuds de distribution situés en aval des anomalies. Cela permet, si besoin, de limiter les analyses humaines aux anomalies les plus pertinentes. En variante, d'autres critères peuvent être utilisés pour l'ordonnancement.

### Brève description des dessins

D'autres caractéristiques, détails et avantages apparaîtront à la lecture de la description détaillée ci-après, et à l'analyse des dessins annexés, sur lesquels :
**Fig. 1**

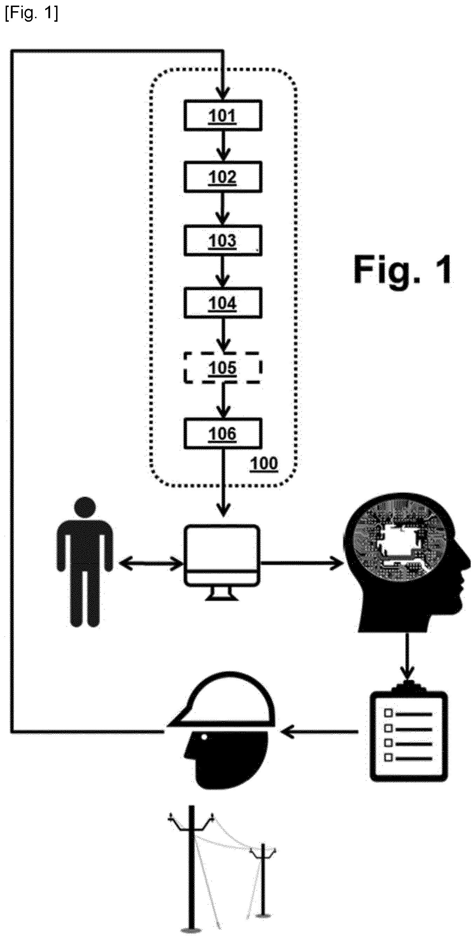

   [Fig. 1] montre un logigramme représentant la mise en oeuvre d'un procédé selon un mode de réalisation.
**Fig. 2**

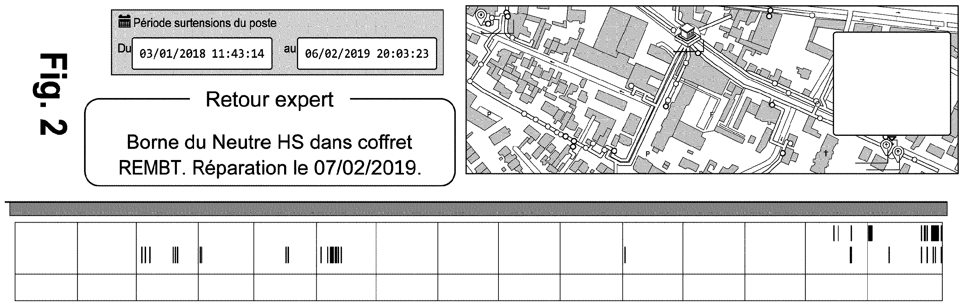

   [Fig. 2] montre un exemple d'interface homme-machine sur laquelle s'affiche des données agrégées selon un mode de réalisation.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Dans la présente divulgation, certaines données / informations sont dites « horodatées ». Cela signifie qu'une date, ou une période bornée par deux dates, est associée au reste des données. Dans les exemples proposés, le niveau de précision des dates est la seconde (par exemple au format année-mois-jour-heure-minute-seconde). En variante, le niveau de précision des dates est adapté au contexte d'utilisation.

Dans la suite, il est fait mention de « capteur(s) ». De tels capteurs peuvent être autonomes ou être intégrés à un ensemble incluant d'autres équipements tels que des organes de mémoire, de traitement et de communication. Par exemple, un ensemble de tels équipements peut être disposé à l'interface du réseau de distribution et d'un réseau tiers, et inclure de tels capteurs. Dans le langage courant, un tel appareillage est souvent appelé « compteur ». On notera ici, que le terme « compteur » résulte de la fonction historique de tels appareillages : compter la consommation électrique à des fins de facturation. Désormais, les « compteurs » assurent d'autres fonctions que le seul comptage et permettent une surveillance du réseau pour une gestion technique.

Dans l'exemple décrit ici, des capteurs sont disposés sur le réseau, notamment aux noeuds de consommation, c'est-à-dire aux extrémités avals du réseau de distribution. Les capteurs mesurent, sensiblement en continu, une tension, un courant et / ou une puissance. Lorsqu'une excursion hors d'une plage prédéterminée est mesurée pour l'une au moins de ces valeurs, un jeu de données relatif à une anomalie est généré et enregistré. Par exemple, lorsque la tension est en dehors d'une plage de ±10% d'une tension nominale, ou lorsqu'elle dépasse une limite de surtension (par exemple fixée à 270V), ou encore lorsqu'elle est inférieure à un seuil de coupure (par exemple fixé à 160V), un jeu de données relatif à une anomalie est généré.

Un tel jeu de données de l'anomalie est généré, enregistré localement, puis transmis à un collecteur distant, par exemple via Courant Porteur en Ligne (CPL).

Chaque jeu de données inclut une combinaison d'au moins une date et une position sur le réseau. La date correspond à la date de la mesure de l'anomalie, c'est-à-dire un instant représenté par un unique horodatage. En variante, au moins une paire de dates bornant une période est incluse dans le jeu de données. La position sur le réseau peut être, par exemple, une position géographique telle que des coordonnées GPS ou bien un identifiant du capteur permettant *a posteriori* d'en déduire une position sur le réseau. De manière générale, la donnée de position doit permettre de localiser le capteur ayant mesuré l'anomalie par rapport aux autres équipements du réseau.

Dans des exemples, les jeux de données peuvent comprendre, en outre, au moins une donnée qualifiant l'anomalie, par exemple une information quantifiant une excursion de tension. Les jeux de données peuvent en outre comprendre d'autres types de données.

Dans la suite, un procédé 100 de traitement des données est décrit, en le décomposant en opérations et basé sur celui représenté en [Fig. 2].

Dans une opération 101, les jeux de données issus des capteurs sont collectés et centralisés. Un tel collecteur peut être, par exemple, disposé au niveau d'un transformateur situé en une extrémité amont du réseau. Les données collectées sont ensuite traitées par les moyens informatiques, tels qu'un processeur associé à un organe de mémoire. Les moyens informatiques peuvent être intégrés au collecteur ou être déportés.

Dans une opération 102, des données topologiques d'une zone respective sont associées à chaque jeu de données d'anomalies collecté. La zone respective est déterminée en fonction de la position contenue dans chaque jeu de données d'anomalies. Les données topologiques sont, par exemple, préalablement disponibles dans une base de données accessible aux moyens informatiques mettant en oeuvre le procédé. Par exemple, la base de données dans laquelle sont stockées les données topologiques forme une partie au moins d'un Système d'information Géographique (SIG).

Dans l'exemple décrit ici, les données topologiques de chaque zone du réseau comprennent l'un au moins des paramètres suivants :
- départ basse tension de rattachement électrique du capteur ;
- rang du branchement sur le départ ;
- distance (géographique ou en câblage) jusqu'au transformateur ;
- type du câblage de la zone ;
- nature aérienne / souterraine (câble enfoui) du réseau ;
- identifiant du transformateur le plus proche situé en amont ;
- charges horodatées de la zone du réseau ;
- phénomènes météorologiques horodatées de la zone ;
- existence d'opérations de maintenance ou de travaux horodatées dans la zone ;
- informations sur des opérations de maintenance ou de travaux horodatées dans la zone ;
- présence de fourniture locale d'énergie (couramment appelée « production décentralisée », souvent de type photovoltaïque, éolien, cogénération, etc. sur le réseau lui-même ou sur un réseau situé en amont, tel qu'un réseau de transport haute-tension).

L'identifiant du transformateur peut être complétée par une information relative à la puissance du transformateur (autrement dit son dimensionnement). Les charges peuvent comprendre des informations sur la consommation d'électricité des noeuds de consommations et/ou sur la fourniture d'électricité sur le réseau.

Ensuite, au cours d'une opération 103, les jeux de données de défauts auxquels ont été associées des données topologiques sont groupés par plages temporelles (ou fenêtres temporelles) en fonction de leurs dates respectives. Autrement dit, des jeux relatifs à des anomalies concomitantes, ou du moins peu espacées dans le temps les unes des autres, sont rassemblés en un groupe. Par exemple, les plages temporelles correspondent à des semaines calendaires. Usuellement, regrouper des évènements par date a pour but de rassembler, et donc d'identifier, les évènements ayant une cause commune ou des causes dépendantes l'une de l'autre. Ici, le but est différent : on souhaite, dans un premier temps, identifier des anomalies résultant d'évènements distincts mais présentant néanmoins des caractéristiques semblables. À cet effet, les anomalies sont préalablement regroupées par plages temporelles. Cela permet de limiter le risque que deux anomalies résultant d'un même et unique évènement (et donc probablement concomitantes) puissent ensuite être réparties dans deux groupes différents. Dans le cas contraire, les deux anomalies pourraient être considérées comme ayant des caractéristiques semblables pour d'autres raisons que leur origine commune, ce qui créerait un biais.

Ensuite, au cours d'une opération 104, des jeux de données présentant des dates différentes, ou espacées de plus d'un seuil prédéterminé, sont corrélés. Autrement dits, des données topologiques associées à des jeux de données appartenant à des groupes distincts les uns des autres sont comparées. À la suite de ces comparaisons, des corrélations sont établies lorsque certaines au moins des données topologiques sont semblables ou identiques. Par exemple, des anomalies ayant eu lieu à des dates différentes, et pour lesquels les zones du réseau concernées sont situées en aval de transformateurs distincts mais de même modèle, peuvent être agrégés. Il en est de même, par exemple, pour des câbles distincts mais de même nature. Ainsi, les anomalies dont les données sont agrégées ne résultent pas *a priori* d'un même évènement mais peuvent permettre d'identifier une source des anomalies liées à un modèle de transformateur particulier. Bien entendu, cela n'est qu'un exemple non limitatif. D'autres paramètres, ou combinaison de paramètres, peuvent ainsi être identifiés comme origine vraisemblable d'anomalies.

On comprend alors que l'assistance des experts humain par un procédé informatique est particulièrement avantageux lorsque le nombre et la complexité des données et paramètres sont élevés.

Dans des modes de réalisation, le niveau d'exigence portant sur les similitudes pour qu'une corrélation soit établie, et que les jeux de données soient agrégés, peut être choisi. Par exemple, une corrélation peut être établie seulement lorsqu'un nombre minimum de similitudes entre les données topologiques est constaté lors des comparaisons.

En outre, des indices de pertinence peuvent être attribués à chaque type de donnée topologique. Dans ce cas, l'établissement d'une corrélation peut être rendu dépendant non plus seulement du nombre de similitudes mais aussi de leur degré de pertinence. Par exemple, une similitude quant à l'existence d'une opération de maintenance sur la zone du réseau concernée par l'anomalie peut être rendue plus pertinente qu'une similitude quant à la nature des câblages. Un expert saura attribuer des indices de pertinence à chaque donnée topologique. L'attribution des indices de pertinence résulte des connaissances théoriques et de l'expérience pratique de l'expert, ainsi que du contexte d'application.

L'étape de corrélation des groupes de données peut en outre inclure le respect d'un maximum de jeux de données par agrégat à ne pas dépasser. Un tel maximum est par exemple choisi en fonction des capacités humaines à comparer les jeux de données. Par conséquent, le maximum dépend aussi de la complexité des jeux de données eux-mêmes : plus le nombre de données constituant chaque jeu de données est grand, moins le maximum doit être élevé, et *vice versa.*

Dans une opération 105 optionnelle, les agrégats obtenus peuvent être ordonnancés les uns par rapport aux autres. Un tel ordonnancement peut être dépendant d'une pertinence estimée des agrégats et/ou fonction du nombre total de noeuds de distribution situés en aval des zones correspondant aux jeux de données de chaque agrégat. Dans ce deuxième cas, cela permet, par exemple, de prioriser certaines analyses humaines ultérieures en fonction d'un nombre de noeuds de distribution situés en aval des anomalies, et donc *a priori* en fonction du nombre de personnes impactées par les anomalies et leurs conséquences. En pratique, un algorithme permet d'attribuer un score à chaque agrégat. La comparaison des scores les uns par rapport aux autres permet d'ordonnancer les agrégats les uns par rapport aux autres. Un filtre peut être appliqué sur les scores pour retenir seulement les agrégats les plus pertinents et donc les anomalies à traiter.

Dans une opération 106 ultérieure, les agrégats de groupes de jeux de données corrélés sont transmis à destination d'une interface homme-machine. Cela permet que lesdites données soient présentées à un humain pour analyse.

L'interface homme-machine peut, par exemple, prendre la forme d'une page web à partir de laquelle des experts peuvent à la fois consulter les données représentées et les modifier, compléter corriger. Dans le contexte de la présente divulgation, les données agrégées sont de préférence présentées d'une manière qui facilite leur comparaison par un humain, typiquement en mettant en avant les points communs entre deux jeux de données du même agrégat. Le but est ici de faciliter et accélérer la classification humaine des données avant utilisation par un réseau neuronal, dans le contexte d'un apprentissage supervisé. Bien entendu, la manière de présenter les données via l'interface-machine peut prendre une infinité de formes. [Fig. 2] est une capture d'écran d'une telle interface. La forme de la présentation qui y est représentée a ici, un, but illustratif et non limitatif.

De préférence, l'interface est agencée pour inclure une combinaison d'au moins une représentation spatiale (par exemple une carte) et d'une représentation temporelle (par exemple une frise chronologique).

La demanderesse a mis en oeuvre le procédé et obtenu une base d'apprentissage de plus de 1 400 labélisations par des experts ayant travaillé sur une telle interface. Un algorithme construit par apprentissage supervisé sur une telle base d'apprentissage et des données d'anomalies anciennes a permis de planifier des interventions préventives virtuelles. Dit autrement, il a été possible de détecter une nécessité d'intervention prochaine sur le réseau (dans les prochains jours par exemple). Bien entendu, le critère de « nécessité » peut être adapté, en outre, à des exigences du gestionnaire de réseau en termes de qualité de service. Les critères retenus ici visaient, par exemple, à empêcher les coupures accidentelles et à maintenir une tension constante à +/- 10 %. Parmi les interventions préventives identifiées, 95% avaient déjà été réalisées ou panifiées par des experts, ce qui démontre la pertinence des prévisions. En outre, 90 % des interventions réellement mises en oeuvre sur le terrain avaient aussi été identifiées par l'algorithme.

La présente divulgation ne se limite pas aux exemples de procédés, utilisations, programmes informatiques et supports d'enregistrement non transitoire décrits ci-avant, seulement à titre d'exemple, mais elle englobe toutes les variantes que pourra envisager la personne du métier dans le cadre de la protection recherchée.

### Liste des signes de référence

- 100 : Procédé
- 101 : opération de collecte ;
- 102 ¨ opération d'association ;
- 103 : opération de groupement ;
- 104 : opération de corrélation ;
- 105 : opération d'ordonnancement ;
- 106 : opération de transmission.

## Revendications

1. Procédé (100) d'aide au diagnostic de réseaux de distribution électrique, mis en oeuvre par des moyens informatiques, comprenant :
a. collecter (101) et centraliser des jeux de données d'anomalies, chaque jeu correspondant à une anomalie détectée par au moins un capteur parmi une pluralité de capteurs répartis sur un réseau de distribution électrique, chaque jeu incluant une combinaison d'au moins une date et une position sur ledit réseau ;
b. associer (102), à chaque jeu de données d'anomalies, des données topologiques d'une zone respective dudit réseau, ladite zone respective étant déterminée en fonction de la position contenue dans chaque jeu de données d'anomalies ;
**caractérisé en ce que** le procédé (100) comprend en outre les étapes suivantes :
c. grouper (103) les jeux de données de défauts par plages temporelles en fonction de leurs dates respectives ;
d. corréler (104) des groupes de jeux de données présentant des dates différentes et des similitudes dans leurs données topologiques respectives associées de manière à former des agrégats de groupes de jeux de données, ;
e. transmettre (106), à destination au moins d'une interface homme-machine, les agrégats de groupes de jeux de données corrélés, de sorte que lesdites données puissent être présentées à un humain pour analyse,
f. à partir desdits agrégats de groupes de jeux de données corrélés transmis, déterminer un plan d'interventions à mettre en oeuvre sur le réseau de distribution électrique.

2. vProcédé selon la revendication précédente, dans lequel les jeux d'anomalies collectés sont reçus de capteurs agencés pour transmettre un jeu de données d'anomalie seulement à détection d'une excursion de tension, de courant et / ou de puissance hors de plages prédéterminées, chaque jeu de données comprenant en outre une donnée qualifiant ladite excursion.

3. Procédé selon l'une des revendications précédentes, dans lequel les données topologiques de chaque zone du réseau comprennent l'un au moins des paramètres suivants :
- départ basse tension de rattachement électrique du capteur ;
- rang du branchement sur le départ ;
- distance (géographique ou en câblage) jusqu'au transformateur ;
- type du câblage de la zone ;
- nature aérienne / souterraine (câble enfoui) du réseau ;
- identifiant du transformateur le plus proche situé en amont ;
- charges horodatées de la zone du réseau ;
- phénomènes météorologiques horodatées de la zone ;
- existence d'opérations de maintenance ou de travaux horodatées dans la zone ;
- informations sur des opérations de maintenance ou de travaux horodatées dans la zone ;
- présence de fourniture locale d'énergie ;
- présence d'équipement de jonction ;
- informations de réparations effectuées sur le réseau ;
- âge des éléments du réseau.

4. Procédé selon l'une des revendications précédentes, comprenant en outre, avant de transmettre (106) les agrégats de groupes de jeux de données corrélés à destination d'une interface homme-machine :
d') ordonnancer (105) les agrégats les uns par rapport aux autres en fonction du nombre total de noeuds de distribution situés en aval des zones correspondant aux jeux de données de chaque agrégat, de sorte que les analyses humaines puissent être priorisées en fonction d'un nombre de noeuds de distribution situés en aval des anomalies.

5. Utilisation du procédé selon l'une des revendications précédentes pour l'assistance à la classification de données d'apprentissage supervisé.

6. Programme informatique comportant des instructions pour la mise en oeuvre du procédé selon l'une des revendications 1 à 4 lorsque ce programme est exécuté par un processeur.

7. Support d'enregistrement non transitoire lisible par un ordinateur sur lequel est enregistré un programme pour la mise en oeuvre du procédé selon l'une des revendications 1 à 4 lorsque ce programme est exécuté par un processeur.

## Patentansprüche

1. Verfahren (100) zur Unterstützung der Diagnose von Stromverteilungsnetzen, das durch Informatikmittel implementiert wird, umfassend:
a. Sammeln (101) und Zentralisieren von Anomaliedatensätzen, wobei jeder Satz einer Anomalie entspricht, die von wenigstens einem Sensor aus einer Vielzahl von über ein Stromverteilungsnetz verteilten Sensoren erfasst wurde, wobei jeder Satz eine Kombination aus wenigstens einem Datum und einer Position auf dem Netz umfasst;
b. Zuordnen (102) von topologischen Daten eines jeweiligen Bereichs des Netzes zu jedem Satz von Anomaliedaten, wobei der jeweilige Bereich abhängig von der in jedem Satz von Anomaliedaten enthaltenen Position bestimmt wird;
**dadurch gekennzeichnet, dass** das Verfahren (100) ferner die folgenden Schritte umfasst:
c. Gruppieren (103) der Fehlerdatensätze nach Zeitbereichen abhängig von ihren jeweiligen Daten;
d. Korrelieren (104) von Gruppen von Datensätzen mit unterschiedlichen Zeitbereichen und Ähnlichkeiten in ihren jeweiligen zugeordneten topologischen Daten, um Aggregate von Datensatzgruppen zu bilden;
e. Übertragen (106) der korrekten Aggregate von Datensatzgruppen an wenigstens eine Mensch-Maschine-Schnittstelle, so dass die Daten einem Menschen zur Analyse vorgelegt werden können,
f. Basierend auf den genannten Aggregaten von Gruppen übermittelter korrekter Datensätze Bestimmen eines Plans für Interventionen, die im Stromverteilungsnetz durchgeführt werden sollen.

2. Verfahren nach dem vorhergehenden Anspruch, wobei die gesammelten Anomaliesätze von Sensoren erfasst werden, die dazu angeordnet sind, einen Anomaliedatensatz nur dann zu übertragen, wenn eine Abweichung der Spannung, des Stroms und/oder der Leistung von vorgegebenen Bereichen festgestellt wird, wobei jeder Datensatz ferner Daten enthält, die diese Abweichung qualifizieren.

3. Verfahren nach einem der vorhergehenden Ansprüche, wobei die topologischen Daten jedes Netzbereichs wenigstens einen der folgenden Parameter umfassen:
- Niederspannungsabzweig des elektrischen Anschlusses des Sensors;
- Rang der Abzweigung an den Anschluss;
- Entfernung (geografisch oder durch Verkabelung) zum Transformator;
- Art der Verkabelung des Bereichs;
- oberirdischer/unterirdischer (erdverlegter) Charakter des Netzes;
- Kennung des nächstgelegenen stromaufwärtigen Transformators;
- zeitlich festgelegte Belastungen des Netzbereichs;
- Zeitgesteuerte meteorologische Phänomene in dem Gebiet;
- Vorhandensein zeitgesteuert festgelegter Wartungs- oder Bauarbeiten in dem Gebiet;
- Informationen über zeitgesteuerte Wartungs- oder Bauarbeiten in dem Gebiet;
- Vorhandensein einer lokalen Energieversorgung;
- Vorhandensein von Verbindungsleitungen;
- Informationen über Reparaturen, die am Netz durchgeführt wurden;
- Alter der Elemente des Netzwerks.

4. Verfahren nach einem der vorhergehenden Ansprüche, das vor der Übertragung (106) der Aggregate von Gruppen korrellierter Datensätze an eine Mensch-Maschine-Schnittstelle ferner Folgendes umfasst:
d') Ordnen (105) der Aggregate relativ zueinander auf der Grundlage der Gesamtzahl der Verteilerknoten stromabwärts der Zonen, die den Datensätzen der jeweiligen Aggregate entsprechen (105), so dass menschliche Analysen auf der Grundlage einer Anzahl von Verteilerknoten stromabwärts der Anomalien priorisiert werden können.

5. Anwendung des Verfahrens nach einem der vorhergehenden Ansprüche zur Unterstützung der Klassifizierung von überwachten Trainingsdaten.

6. Computerprogramm mit Anweisungen zur Durchführung des Verfahrens nach einem der Ansprüche 1 bis 4, wenn das Programm von einem Prozessor ausgeführt wird.

7. Computerlesbares, nicht-transitorisches Aufzeichnungsmedium, auf dem ein Programm zur Durchführung des Verfahrens nach einem der Ansprüche 1 bis 4 aufgezeichnet ist, wenn dieses Programm von einem Prozessor ausgeführt wird.

## Claims

1. A method (100) for aiding in diagnostic of electrical distribution networks, implemented by computing means, comprising:
a. collecting (101) and centralising anomaly data sets, each set corresponding to an anomaly detected by at least one sensor from a plurality of sensors distributed on an electrical distribution network, each set including a combination of at least one date and one position on said network;
b. associating (102), with each anomaly data set, topological data of a respective zone of said network, said respective zone being determined as a function of the position contained in each anomaly data set;
**characterised in that** the method (100) further comprises the following steps:
c. grouping (103) the fault data sets per time ranges as a function of their respective dates;
d. correlating (104) data set groups having different dates and similarities in their respective topological data associated so as to form aggregates of data set groups;
e. transmitting (106), to at least one human-machine interface, the aggregates of data set groups correlated, so that said data can be presented to a human for analysis,
f. from said aggregates of data set groups correlated and transmitted, determining a response plan to be implemented on the electrical distribution network.

2. The method according to the preceding claim, wherein the anomaly sets collected are received from sensors arranged to transmit an anomaly data set only upon detecting a voltage, current and/or power swing out of predetermined ranges, each data set further comprising a piece of data describing said swing.

3. The method according to one of the preceding claims, wherein the topological data of each zone of the network comprise at least one of the following parameters:
- low-voltage outgoing cable for electrically attaching the sensor;
- rank of the connection to the outgoing cable;
- distance (geographical or wiring) to the transformer;
- wiring type of the zone;
- overhead/underground (embedded cable) character of the network;
- identifier of the closest transformer located upstream;
- time-stamped loads of the zones of the network;
- time-stamped weather events of the zone;
- existence of time-stamped maintenance or work operations in the zone;
- information on the time-stamped maintenance or work operations in the zone;
- presence of local energy supply;
- presence of junction equipment;
- information of repairs performed on the network;
- age of elements of the network.

4. The method according to one of the preceding claims, further comprising, before transmitting (106) the aggregates of data set groups correlated to a human-machine interface:
d') scheduling (105) the aggregates relative to each other as a function of the total number of distribution nodes located downstream of the zones corresponding to the data sets of each aggregate, so that human analyses can be prioritised as a function of a number of distribution nodes located downstream of the anomalies.

5. A use of the method according to one of the preceding claims, for assisting in the classification of supervised learning data.

6. A computer program including instructions for implementing the method according to one of claims 1 to 4 when this program is executed by a processor.

7. A computer-readable non-transient recording medium having a program recorded thereon for implementing the method according to one of claims 1 to 4 when this program is executed by a processor.
